# EUROPÄISCHE PATENTSCHRIFT

(11) **EP 3 842 324 B1**
(45) Veröffentlichungstag und Bekanntmachung des Hinweises auf die Patenterteilung: **16.08.2023**
(21) Anmeldenummer: 20203955.8
(22) Anmeldetag: 26.10.2020
(51) Int. Cl.: B62D 55/26, B62D 55/253

(54) **KETTENSTEGANORDNUNG FÜR EINE LAUFWERKSKETTE EINES KETTENFAHRZEUGS UND VERFAHREN ZUR HERSTELLUNG EINER DERARTIGEN KETTENSTEGANORDNUNG**
CHAIN LINK ASSEMBLY FOR A TRACK CHAIN OF A TRACKED VEHICLE AND METHOD FOR MANUFACTURING SUCH A CHAIN LINK ASSEMBLY
AGENCEMENT D'ÉTANÇON POUR UNE CHENILLE D'ENTRAÎNEMENT D'UN VÉHICULE À CHENILLES ET PROCÉDÉ DE FABRICATION D'UN TEL AGENCEMENT D'ÉTANÇON

(30) Priorität: 23.12.2019 DE 102019220531
(43) Veröffentlichungstag der Anmeldung: 30.06.2021
(73) Patentinhaber: Kässbohrer Geländefahrzeug AG, 88471 Laupheim (DE)
(72) Erfinder: Cornely, Timo, 88437 Maselheim (DE); Junginger, Bernd, 89134 Blaustein-Bermaringen (DE)
(74) Vertreter: Patentanwälte Ruff, Wilhelm, Beier, Dauster & Partner mbB

(56) Entgegenhaltungen:
- EP-A1- 3 213 983
- CN-A- 101 264 773
- DE-A1-102013 204 627
- DE-A1-102017 203 363
- DE-B3-102015 208 614

## Beschreibung

Die Erfindung betrifft eine Kettensteganordnung für eine Laufwerkskette eines Kettenfahrzeugs mit einem Kettenstegprofil aus einer Metalllegierung, sowie mit einem Spurbügel, der in montiertem Zustand fest mit dem Kettenstegprofil verbunden ist. Die Erfindung betrifft zudem ein Verfahren zur Herstellung einer solchen Kettensteganordnung für eine Laufwerkskette eines Kettenfahrzeugs.

Eine derartige Kettensteganordnung ist aus der DE 10 2013 204 627 B4 bekannt. Die bekannte Kettensteganordnung weist ein Kettenstegprofil sowie einen Spurbügel auf, der über Schraubverbindungen fest mit dem Kettenstegprofil verbindbar ist.

Die DE 10 2015 208614 B3 offenbart eine Kettensteganordnung gemäß dem Oberbegriff des Anspruchs 1.

Aufgabe der Erfindung ist es, eine Kettensteganordnung sowie ein Verfahren der eingangs genannten Art zu schaffen, die eine verbesserte Biegesteifigkeit für die Kettensteganordnung bewirken.

Für die Kettensteganordnung wird die der Erfindung zugrunde liegende Aufgabe dadurch gelöst, dass der Spurbügel und das Kettenstegprofil mit zueinander komplementären Längsprofilierungen versehen sind, die orthogonal zu ihrer Längsrichtung wenigstens einen Hinterschnitt bilden, der den Spurbügel orthogonal zur Längsrichtung formschlüssig an dem Kettenstegprofil sichert. Unter der orthogonalen Ausrichtung ist eine Orthogonale relativ zu einer Verbindungsfläche zwischen Kettenstegprofil und Spurbügel zu verstehen, die parallel oder koplanar zu einer Kettenbandebene der Laufwerkskette verläuft. Der erfindungsgemäße Formschluss verhindert demzufolge, dass der Spurbügel in Hochrichtung der Kettensteganordnung und damit in Hochrichtung des Kettenstegprofiles von dem Kettenstegprofil entfernt werden kann. Die formschlüssige Sicherung erfolgt vorzugsweise durch zueinander komplementäre, C- oder T-förmige Längsprofilierungen. Die formschlüssige Sicherung des Spurbügels an dem Kettenstegprofil gewährleistet eine durchgängig flächige, besonders innige Verbindung zwischen dem Spurbügel und dem Kettenstegprofil, so dass der Spurbügel über seine gesamte Länge zur Versteifung des Kettenstegprofiles beiträgt. Ein Durchbiegen des Kettenstegprofiles im Bereich des Spurbügels wird demzufolge vermieden, wodurch sich insgesamt die Biegesteifigkeit der Kettensteganordnung vergrößert. Zudem ergibt sich erfindungsgemäß eine Vorspannung zwischen dem Spurbügel und dem Kettenstegprofil, so dass eine zusätzliche Schraubverbindung zwischen dem Kettenstegprofil und dem Spurbügel ebenfalls in ausreichender Vorspannung erhalten bleibt. Beschädigungen der Schraubverbindungen können so vermieden werden. Neben der Verhinderung des Verlustes einer Vorspannungskraft und der Verhinderung der Durchbiegung des Kettenstegprofiles unter dem Spurbügel wird auch eine erhöhte Dichtheit an den Verbindungsstellen zwischen dem Spurbügel und dem Kettenstegprofil erzielt, wodurch das Eindringen von Schmutz verhindert werden kann. Die erfindungsgemäße Lösung eignet sich in besonders vorteilhafter Weise für Kettenfahrzeuge, die auf steinigem oder schwer befahrbarem Untergrund als Arbeitsfahrzeuge betrieben werden. Dabei weisen die Kettenstege vorzugsweise eine Gummiprofilierung im Bereich einer Aufstandsfläche auf, d. h. die Kettenstege sind mit einer Gummierung versehen. In gleicher Weise ist die erfindungsgemäße Lösung aber auch für Pistenraupen einsetzbar, die auf Schnee betrieben werden. Derartige Kettenlaufwerke weisen Kettenstege auf, die ausschließlich metallisch, insbesondere aus einer Aluminiumlegierung und aus Stahl, hergestellt sind und damit keine Gummierung aufweisen.

In Ausgestaltung der Erfindung sind der Spurbügel auf einer dem Kettenstegprofil zugewandten Längsseite mit einer im Querschnitt nut- oder kanalförmigen Längsprofilierung und das Kettenstegprofil mit einer komplementär schienenförmigen Längsprofilierung versehen. Die Längsprofilierungen greifen demzufolge in Hochrichtung der Kettensteganordnung gesehen formschlüssig ineinander ein.

In weiterer Ausgestaltung der Erfindung sind die Längsprofilierungen jeweils einstückig an dem Spurbügel und dem Kettenstegprofil angeformt. Vorzugsweise erstreckt sich die Längsprofilierung an dem Kettenstegprofil über eine gesamte Länge des Kettenstegprofiles, so dass das Kettenstegprofil vorteilhaft als Strangpressprofil aus einer Leichtmetalllegierung, insbesondere einer Aluminiumlegierung, hergestellt werden kann.

In weiterer Ausgestaltung der Erfindung liegen die zueinander komplementären Längsprofilierungen des Spurbügels und des Kettenstegprofiles in formschlüssig gesicherter Montagestellung zumindest weitgehend flächig aneinander. Vorzugsweise liegen die komplementären Längsprofilierungen unter Vorspannung flächig aneinander, wodurch sich die zuvor bereits beschriebenen Vorteile ergeben.

In weiterer Ausgestaltung der Erfindung ist der Spurbügel in seiner an der Längsprofilierung des Kettenstegprofils formschlüssig gesicherten Montagestellung zusätzlich kraft- oder stoffschlüssig mit dem Kettenstegprofil verbunden. Der Spurbügel ist vorzugsweise mit dem Kettenstegprofil verpresst oder verschraubt oder verklebt. Die entsprechenden Verbindungsvarianten können auch miteinander kombiniert werden.

In weiterer Ausgestaltung der Erfindung umgreift die Längsprofilierung des Spurbügels die Längsprofilierung des Kettenstegprofiles beidseitig außen formschlüssig. Dadurch ergibt sich ein C-förmiges Umgreifen des Spurbügels relativ zu dem Kettenstegprofil.

In weiterer Ausgestaltung der Erfindung ist die Längsprofilierung des Kettenstegprofils über eine gesamte Länge des Kettenstegprofils durchgängig erstreckt. Diese Ausgestaltung ist vorteilhaft, falls das Kettenstegprofil - wie zuvor bereits ausgeführt - in einem Strangpressverfahren hergestellt wird. Denn dann kann die Längsprofilierung gemeinsam mit der Herstellung des Kettenstegprofiles zwangsläufig mit ausgeformt werden.

In weiterer Ausgestaltung der Erfindung ist die komplementäre Längsprofilierung des Spurbügels über seine gesamte Länge durchgängig erstreckt. Diese Ausgestaltung hat den Vorteil, dass die Längsprofilierung des Spurbügels von einer Stirnseite her auf das Kettenstegprofil aufgeschoben, insbesondere aufgepresst, und über seine gesamte Länge mit dem Kettenstegprofil fest verbunden wird.

In weiterer Ausgestaltung der Erfindung ist das Kettenstegprofil auf seiner zu dem Spurbügel abgewandten Seite mit einer elastisch nachgiebigen Profilierung, insbesondere aus einem Elastomermaterial oder einem thermoplastischen Elastomermaterial, versehen. Die elastisch nachgiebige Profilierung ist vorzugsweise auf die dem Spurbügel abgewandte Seite des Kettenstegprofiles aufvulkanisiert.

Für das Verfahren zur Herstellung einer Kettensteganordnung für eine Laufwerkskette eines Kettenfahrzeugs wie zuvor beschrieben wird die der Erfindung zugrundeliegende Aufgabe dadurch gelöst, dass das Kettenstegprofil abgekühlt wird, dass der Spurbügel erhitzt wird, und dass anschließend der Spurbügel in erhitztem Zustand mit seiner Längsprofilierung auf die komplementäre Längsprofilierung des abgekühlten Kettenstegprofiles in Längsrichtung aufgesteckt wird, und dass abschließend ein gemeinsamer Temperaturausgleich zwischen dem Kettenstegprofil und dem Spurbügel vorgesehen wird. Das Aufstecken erfolgt vorzugsweise durch Aufschieben oder Aufziehen. Das erfindungsgemäße Abkühlen führt zu einer geringfügigen Schrumpfung des Kettenstegprofiles. Das Erhitzen des Spurbügels führt zu einer gewissen Ausdehnung und Aufweitung des Spurbügels. Dadurch ergibt sich zwischen den zueinander komplementären Längsprofilierungen eine Spielpassung, die ein gleitbewegliches Aufstecken der Längsprofilierungen relativ zueinander ermöglichen, solange der Spurbügel und das Kettenstegprofil in den unterschiedlichen Temperaturzuständen befindlich sind. Das anschließende, gemeinsame Abkühlen nach dem Aufschieben oder Aufziehen des Spurbügels auf das Kettenstegprofil führt zwangsläufig zu einem Schrumpfen des aufgrund der Erhitzung aufgeweiteten Spurbügels und einem Ausdehnen des durch die Abkühlung geschrumpften Kettenstegprofils. Hierdurch ergibt sich zwangsläufig eine flächige Verpressung zwischen dem Spurbügel und dem Kettenstegprofil, wodurch die formschlüssige Verbindung zwischen den Längsprofilierungen des Kettenstegprofiles und des Spurbügels zusätzlich einer Vorspannung unterliegt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt ausschnittsweise in perspektivischer Darstellung einen Teilbereich einer Laufwerkskette für ein Kettenlaufwerk eines Kettenfahrzeugs,
- Fig. 2: in vergrößerter, teilweise aufgeschnittener Darstellung eine Ausführungsform einer erfindungsgemäßen Kettensteganordnung für die Laufwerkskette gemäß Fig. 1,
- Fig. 3: in weiter vergrößerter Darstellung einen Ausschnitt der Kettensteganordnung gemäß Fig. 2 und
- Fig. 4: einen Querschnitt durch die Kettensteganordnung gemäß Fig. 3 auf Höhe eines Spurbügels.

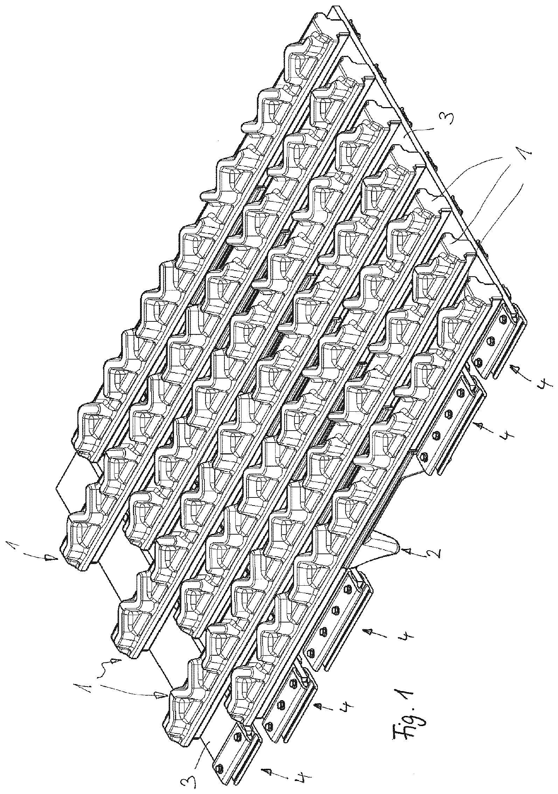

Ein Kettenfahrzeug weist ein Kettenlaufwerk auf, das auf gegenüberliegenden Längsseiten eines Fahrzeugrahmens mit jeweils einer Laufwerkskette versehen ist. Jede Laufwerkskette wird gebildet durch mehrere, in montiertem Zustand umlaufende Kettenbänder 3, die parallel zueinander in Kettenlaufrichtung erstreckt sind, sowie durch eine Vielzahl von quer zur Kettenlaufrichtung erstreckten und parallel zueinander angeordneten Kettensteganordnungen 1, die mit den Kettenbändern 3 verbunden sind. Jede Kettensteganordnung 1 gemäß den Fig. 1 bis 4 weist einen nachfolgend näher beschriebenen Kettensteg sowie einen Spurbügel 2 auf.

Anhand der Fig. 1 ist erkennbar, dass die insgesamt fünf Kettenbänder 3, von denen zwei eine größere Breite aufweisen als die übrigen, an ihren gegenüberliegenden Enden über jeweils ein Kettenschloss 4 zu jeweils einem umlaufenden Kettenband 3 zusammengefügt sind.

Wie anhand der Fig. 1 erkennbar ist, ist ein Kettensteg jeder Kettensteganordnung 1 im Bereich einer Außenseite der Kettenbänder 3 angeordnet, wohingegen der Spurbügel 2 jeder Kettensteganordnung 1 zu einer gegenüberliegenden Innenseite hin von dem jeweiligen Kettensteg abragt. Jeder Kettensteg der Kettensteganordnung 1 weist im Bereich seiner nach außen gerichteten Oberseite eine aufvulkanisierte Gummiprofilierung 6 auf. Jeder Spurbügel 2 jeder Kettensteganordnung 1 ragt entgegengesetzt zu der Gummiprofilierung 6 nach innen von dem jeweiligen Kettensteg ab.

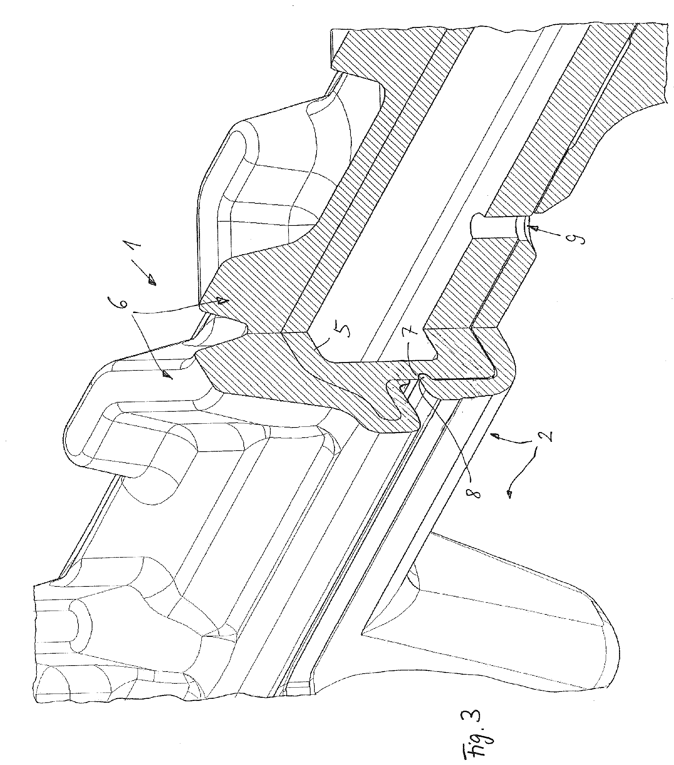

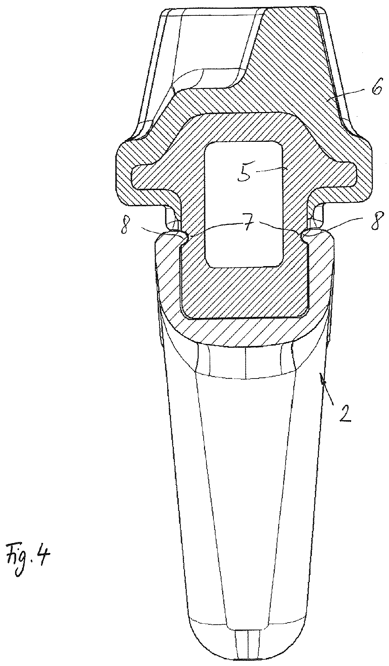

Jeder Kettensteg wird durch ein Kettenstegprofil 5 gebildet, das beim dargestellten Ausführungsbeispiel aus einer Aluminiumlegierung hergestellt ist. Das Kettenstegprofil 5 erstreckt sich über eine gesamte Länge des Kettensteges und damit der Kettensteganordnung 1. Auf einer Außenseite des Kettenstegprofils 5 ist, wie anhand der Fig. 3 und 4 gut erkennbar ist, die Gummiprofilierung 6 über die gesamte Länge des Kettenstegprofils 5 aufvulkanisiert.

Jedes Kettenstegprofil 5 ist im Bereich seiner Unterseite, die in montiertem Zustand auf einer Außenseite der Kettenbänder 3 aufliegt, mit Befestigungsaufnahmen 9 versehen, die vorliegend als Gewindebohrungen ausgeführt sind.

Das Kettenstegprofil 5 ist als Strangpressprofil aus der Aluminiumlegierung hergestellt und weist über seine gesamte Länge unterhalb der Gummiprofilierung 5 (siehe Fig. 3 und 4) eine Längsprofilierung auf, die im Querschnitt einen vierkantförmigen, unteren Abschluss des Kettenstegprofils 5 bildet. Die Längsprofilierung ist demzufolge als etwa vierkantförmiger Schienenabschnitt gestaltet. Der Schienenabschnitt weist im Bereich seiner Unterseite eine ebene Auflagefläche auf, die zur Auflage des Kettenstegprofils 5 auf den Kettenbändern 3 dient. An einem oberen Endbereich des Schienenabschnittes ist beidseitig jeweils eine Längsnut 7 vorgesehen, die ebenfalls Teilabschnitte der Längsprofilierung des Kettenstegprofiles 5 bilden. Die Längsnuten 7 erstrecken sich über eine gesamte Länge des Kettenstegprofils 5 und definieren einen nachfolgend noch näher beschriebenen Hinterschnitt für eine komplementäre Längsprofilierung des Spurbügels 2.

Der Spurbügel 2 weist in grundsätzlich bekannter Weise zwei Spurhörner auf, die im Betrieb der Laufwerkskette Laufräder, sowie ein Antriebsrad und ein Spannrad jeweils beidseitig flankieren. Der Spurbügel 2 ist als einteiliges Bauteil aus einem metallischen Werkstoff, vorliegend aus einer Stahllegierung, hergestellt. Der Spurbügel 2 weist im Bereich seiner dem Kettenstegprofil 5 zugewandten Oberseite einen Aufnahmebereich auf, der als zu der Längsprofilierung des Kettenstegprofils 5 komplementäre Längsprofilierung in Form eines im Wesentlichen C-förmigen, nut- oder kanalförmigen Nutquerschnitts gestaltet ist. Diese Längsprofilierung des Spurbügels 2 erstreckt sich über eine gesamte Länge des Spurbügels 2 und ist zu beiden Stirnseiten des Spurbügels 2 hin offen. Komplementär zu der zuvor beschriebenen Längsprofilierung des Kettenstegprofils 5 weist diese nut- oder kanalförmige Längsprofilierung des Spurbügels 2 eine ebene Bodenfläche sowie zwei zu gegenüberliegenden Seiten von der Bodenfläche aus rechtwinklig nach oben abragende Seitenwandungen auf, die in jeweils einem nach innen zu der gegenüberliegenden Längsseite hin weisenden Längssteg 8 enden. Ein Querschnitt der beiden Längsstege 8 ist auf ihrer dem Kettenstegprofil 5 zugewandten Innenseite auf einen Querschnitt der Längsnuten 7 abgestimmt, so dass die Längsstege 8 formschlüssig in die Längsnuten 7 eingreifen und somit gemeinsam mit den Längsnuten 7 einen Hinterschnitt in Hochrichtung des Spurbügels 2 bilden. Die Längsseiten der nut- oder kanalförmigen Längsprofilierung des Spurbügels 2 erstrecken sich parallel und flächig zu gegenüberliegenden, außenseitigen Längsseiten des Schienenabschnittes des Kettenstegprofils 5, so dass in montiertem Zustand eine Innenkontur der nut- oder kanalförmigen Längsprofilierung des Spurbügels 2 allseits flächig an der komplementären Außenkontur des Schienenabschnitts des Kettenstegprofils 5 anliegt. Die Längsstege 8 greifen in die Längsnuten 7 ein.

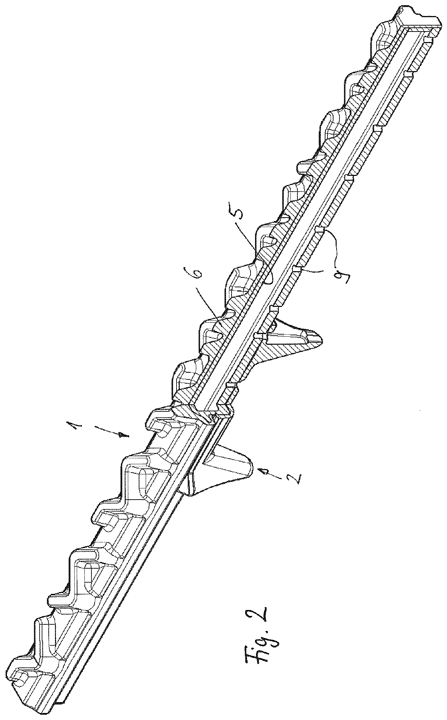

Für eine Montage des Spurbügels 2 an dem Kettenstegprofil 5 wird der als separates, einteiliges Stahlbauteil gestaltete Spurbügel 2 auf eine Temperatur im Bereich von etwa 100°C erhitzt. Gleichzeitig wird das Kettenstegprofil 5, vorliegend mit Hilfe von Trockeneis, auf eine Temperatur abgekühlt, die eine gewisse Schrumpfung der Abmessungen des Kettenstegprofils 5 bewirkt. Da gleichzeitig die Erhitzung des Spurbügels 2 zu einer gewissen Aufweitung und Ausdehnung des Spurbügels 2 führt, ist es möglich, den Spurbügel 2 in dem erhitzten Zustand von einer Stirnseite des Kettenstegprofils 5 her auf das abgekühlte Kettenstegprofil 5 im Bereich der als Schienenabschnitt ausgeführten Längsprofilierung des Kettenstegprofils 5 bis zur Mitte des Kettenstegprofils 5 hin aufzustecken, insbesondere aufzuschieben oder aufzuziehen, bis der Spurbügel 2 seine anhand der Fig. 2 erkennbare Mittellage erreicht hat. In dieser Montagestellung erfolgt nun eine Temperaturangleichung, vorzugsweise auf Raumtemperatur, wodurch sich zwangsläufig aufgrund der sich gegensinnig ergebenden Materialschrumpfungen bzw. Materialausdehnungen beider Bauteile eine Verspannung der beiden Bauteile, d. h. des Kettenstegprofils 5 und des Spurbügels 2, relativ zueinander ergibt. Der Spurbügel 2 und das Kettenstegprofil 5 sind demzufolge nach der Temperaturangleichung miteinander verpresst. Der durch die Längsnuten 7 und die Längsstege 8 gebildete, beidseitige Hinterschnitt bewirkt zum einen eine formschlüssige Sicherung des Spurbügels 2 an dem Kettenstegprofil 5 und zum anderen die Aufrechterhaltung der Vorspannung aufgrund der Verpressung zwischen Kettenstegprofil 5 und Spurbügel 2. Aufgrund der Verpressung liegt die nut- oder kanalförmige Längsprofilierung des Spurbügels 2 über ihre gesamte Innenkontur zumindest weitgehend flächig an der Außenkontur der als Schienenabschnitt gestalteten Längsprofilierung des Kettenstegprofiles 5 fest an.

Im Anschluss an diese Verpressung des Spurbügels 2 relativ zum Kettenstegprofil 5 wird bei der Herstellung der Kettensteganordnung 1 der Spurbügel 2 zusätzlich mit Hilfe von Schraubverbindungen an dem Kettenstegprofil 5 fixiert. Abschließend wird die Gummiprofilierung 6 auf die Außenseite des Kettenstegprofils 5 oberhalb der als Schienenabschnitt gestalteten Längsprofilierung aufvulkanisiert, wie anhand der Fig. 2 bis 4 erkennbar ist. Die so fertiggestellte Kettensteganordnung 1 kann dann in grundsätzlich bekannter Weise mit den Kettenbändern 3 verschraubt werden, um die Laufwerkskette insgesamt montieren zu können. Gleiches gilt für die in identischer Weise montierten und hergestellten weiteren Kettensteganordnungen 1.

## Patentansprüche

1. Kettensteganordnung (1) für eine Laufwerkskette eines Kettenfahrzeugs mit einem Kettenstegprofil (5) aus einer Metalllegierung, sowie mit einem Spurbügel (2), der in montiertem Zustand fest mit dem Kettenstegprofil (5) verbunden ist, **dadurch gekennzeichnet, dass** der Spurbügel (2) und das Kettenstegprofil (5) mit zueinander komplementären Längsprofilierungen versehen sind, die orthogonal zu ihrer Längsrichtung wenigstens einen Hinterschnitt bilden, der den Spurbügel (2) orthogonal zur Längsrichtung formschlüssig an dem Kettenstegprofil (5) sichert.

2. Kettensteganordnung (1) nach Anspruch 1, **dadurch gekennzeichnet, dass** der Spurbügel (2) auf einer dem Kettenstegprofil (5) zugewandten Längsseite mit einer im Querschnitt nut- oder kanalförmigen Längsprofilierung und das Kettenstegprofil (5) mit einer komplementär schienenförmigen Längsprofilierung versehen sind.

3. Kettensteganordnung (1) nach Anspruch 1 oder 2, **dadurch gekennzeichnet, dass** die Längsprofilierungen jeweils einstückig an dem Spurbügel (2) und dem Kettenstegprofil (5) ausgeformt sind.

4. Kettensteganordnung (1) nach einem der vorhergehenden Ansprüche, **dadurch gekennzeichnet, dass** die zueinander komplementären Längsprofilierungen des Spurbügels (2) und des Kettenstegprofils (5) in formschlüssig gesicherter Montagestellung zumindest weitgehend flächig aneinanderliegen.

5. Kettensteganordnung (1) nach einem der vorhergehenden Ansprüche, **dadurch gekennzeichnet, dass** der Spurbügel (2) in seiner an der Längsprofilierung des Kettenstegprofils (5) formschlüssig gesicherten Montagestellung zusätzlich kraft- oder stoffschlüssig mit dem Kettenstegprofil (5) verbunden ist.

6. Kettensteganordnung (1) nach einem der vorhergehenden Ansprüche, **dadurch gekennzeichnet, dass** die Längsprofilierung des Spurbügels (2) die Längsprofilierung des Kettenstegprofils (5) beidseitig außen formschlüssig umgreift.

7. Kettensteganordnung (1) nach einem der vorhergehenden Ansprüche, **dadurch gekennzeichnet, dass** die Längsprofilierung des Kettenstegprofils (5) über eine gesamte Länge des Kettenstegprofils (5) durchgängig erstreckt ist.

8. Kettensteganordnung (1) nach Anspruch 7, **dadurch gekennzeichnet, dass** die komplementäre Längsprofilierung des Spurbügels (2) über seine gesamte Länge durchgängig erstreckt ist.

9. Kettensteganordnung (1) nach einem der vorhergehenden Ansprüche, **dadurch gekennzeichnet, dass** die Querschnitte der Längsprofilierungen des Spurbügels (2) und des Kettenstegprofils (5) derart aufeinander abgestimmt sind, dass sich eine zumindest weitgehend flächige Gleitführung für die Längsprofilierung relativ zueinander ergibt.

10. Kettensteganordnung (1) nach einem der vorhergehenden Ansprüche, **dadurch gekennzeichnet, dass** das Kettenstegprofil (5) auf seiner zu dem Spurbügel (2) abgewandten Seite mit einer elastisch nachgiebigen Profilierung (6), insbesondere aus einem Elastomermaterial oder einem thermoplastischen Elastomermaterial, versehen ist.

11. Verfahren zur Herstellung einer Kettensteganordnung (1) für eine Laufwerkskette eines Kettenfahrzeugs nach einem der vorhergehenden Ansprüche, **dadurch gekennzeichnet, dass** das Kettenstegprofil (5) abgekühlt wird, dass der Spurbügel (2) erhitzt wird, und dass anschließend der Spurbügel (2) in erhitztem Zustand mit seiner Längsprofilierung auf die komplementäre Längsprofilierung des abgekühlten Kettenstegprofils (5) in Längsrichtung aufgesteckt wird, und dass abschließend ein gemeinsamer Temperaturausgleich zwischen dem Kettenstegprofil (5) und dem Spurbügel (2) vorgesehen wird.

## Claims

1. A track cleat arrangement (1) for a track chain of a tracked vehicle having a track cleat section (5) made of a metal alloy and a track guide (2) which is firmly connected to the track cleat section (5) in the fitted state, **characterized in that** the track guide (2) and the track cleat section (5) are provided with longitudinal profiles complementary to one another and forming orthogonally to their longitudinal direction at least one undercut that positively secures the track guide (2) on the track cleat section (5) orthogonally to the longitudinal direction.

2. The track cleat arrangement (1) according to claim 1, **characterized in that** the track guide (2) is provided on a longitudinal side facing the track cleat section (5) with a longitudinal profile of groove-like or channel-like cross-section, and the track cleat section (5) is provided with a complementarily rail-like longitudinal profile.

3. The track cleat arrangement (1) according to claim 1 or 2, **characterized in that** the longitudinal profiles are each formed in one piece on the track guide (2) and on the track cleat section (5).

4. The track cleat arrangement (1) according to any of the preceding claims, **characterized in that** the mutually complementary longitudinal profiles of the track guide (2) and of the track cleat section (5) are at least largely in surface contact with one another in a positively secured mounting position.

5. The track cleat arrangement (1) according to any of the preceding claims, **characterized in that** the track guide (2) is, in its mounting position positively secured on the longitudinal profile of the track cleat section (5), additionally in a non-positive or substance-to-substance connection to the track cleat section (5).

6. The track cleat arrangement (1) according to any of the preceding claims, **characterized in that** the longitudinal profile of the track guide (2) positively grips around both sides of the longitudinal profile of the track cleat section (5) on the outside.

7. The track cleat arrangement (1) according to any of the preceding claims, **characterized in that** the longitudinal profile of the track cleat section (5) extends continuously over a full length of the track cleat section (5).

8. The track cleat arrangement (1) according to claim 7, **characterized in that** the complementary longitudinal profile of the track guide (2) extends continuously over its full length.

9. The track cleat arrangement (1) according to any of the preceding claims, **characterized in that** the cross-sections of the longitudinal profiles of the track guide (2) and of the track cleat section (5) are matched to one another such that an at least largely planarsliding guidance for the longitudinal profiles relative to one another is obtained.

10. The track cleat arrangement (1) according to any of the preceding claims, **characterized in that** the track cleat section (5) is provided on its side facing away from the track guide (2) with an elastically flexible profile (6), in particular made of an elastomer material or thermoplastic elastomer material.

11. A method for manufacturing a track cleat arrangement (1) for a track chain of a tracked vehicle according to any of the preceding claims, **characterized in that** the track cleat section (5) is cooled, **in that** the track guide (2) is heated, **in that** the track guide (2) is then fitted in the heated state with its longitudinal profile onto the complementary longitudinal profile of the cooled track cleat section (5) in the longitudinal direction, and **in that** finally a joint temperature equalization is provided between the track cleat section (5) and the track guide (2).

## Revendications

1. Agencement d'étançon (1) pour une chaîne de chenille d'un véhicule à chenilles avec un profilé d'étançon (5) en alliage métallique, ainsi qu'avec un guide-roue (2) qui, à l'état monté, est relié fixement au profilé d'étançon (5), **caractérisé en ce que** le guide-roue (2) et le profilé d'étançon (5) sont pourvus de profilages longitudinaux complémentaires l'un de l'autre qui forment, orthogonalement à leur direction longitudinale, au moins une contre-dépouille qui sécurise le guide-roue (2) orthogonalement à la direction longitudinale par complémentarité de forme sur le profilé d'étançon (5).

2. Agencement d'étançon (1) selon la revendication 1, **caractérisé en ce que** le guide-roue (2) est pourvu, sur un côté longitudinal tourné vers le profilé d'étançon (5), d'un profilage longitudinal en forme de rainure ou de canal en section transversale et que le profilé d'étançon (5) est pourvu d'un profilage longitudinal en forme de rail complémentaire.

3. Agencement d'étançon (1) selon la revendication 1 ou 2, **caractérisé en ce que** les profilages longitudinaux sont formés respectivement d'une seule pièce sur le guide-roue (2) et le profilé d'étançon (5).

4. Agencement d'étançon (1) selon l'une des revendications précédentes, **caractérisé en ce que** les profilages longitudinaux réciproquement complémentaires du guide-roue (2) et du profilé d'étançon (5) sont au moins en grande partie à plat l'un contre l'autre dans la position de montage sécurisée par complémentarité de forme.

5. Agencement d'étançon (1) selon l'une des revendications précédentes, **caractérisé en ce que** le guide-roue (2), dans sa position de montage sécurisée par complémentarité de forme sur le profilage longitudinal du profilé d'étançon (5), est en outre relié au profilé d'étançon (5) par complémentarité de force ou de matière.

6. Agencement d'étançon (1) selon l'une des revendications précédentes, **caractérisé en ce que** le profilage longitudinal du guide-roue (2) entoure le profilage longitudinal du profilé d'étançon (5) des deux côtés à l'extérieur par complémentarité de forme.

7. Agencement d'étançon (1) selon l'une des revendications précédentes, **caractérisé en ce que** le profilage longitudinal du profilé d'étançon (5) s'étend de manière continue sur toute une longueur du profilé d'étançon (5).

8. Agencement d'étançon (1) selon la revendication 7, **caractérisé en ce que** le profilage longitudinal complémentaire du guide-roue (2) s'étend de manière continue sur toute sa longueur.

9. Agencement d'étançon (1) selon l'une des revendications précédentes, **caractérisé en ce que** les sections transversales des profilages longitudinaux du guide-roue (2) et du profilé d'étançon (5) sont adaptées l'une à l'autre de telle sorte qu'il en résulte un guide de coulissement au moins en grande partie plat pour les profilages longitudinaux l'un par rapport à l'autre.

10. Agencement d'étançon (1) selon l'une des revendications précédentes, **caractérisé en ce que** le profilé d'étançon (5) est pourvu, sur sa face opposée au guide-roue (2), d'un profilage (6) élastiquement flexible, en particulier en matériau élastomère ou en matériau élastomère thermoplastique.

11. Procédé de fabrication d'un agencement d'étançon (1) pour une chaîne de chenille d'un véhicule à chenilles selon l'une des revendications précédentes, **caractérisé en ce que** le profilé d'étançon (5) est refroidi, que le guide-roue (2) est chauffé, et **en ce qu'**ensuite le guide-roue (2) à l'état chauffé est enfilé par son profilage longitudinal sur le profilage longitudinal complémentaire du profilé d'étançon refroidi (5) dans la direction longitudinale, et **en ce que** finalement un équilibrage thermique est prévu entre le profilé d'étançon (5) et le guide-roue (2).
